# EUROPEAN PATENT SPECIFICATION

(11) **EP 0 988 622 B1**
(45) Date of publication and mention of the grant of the patent: **03.09.2003**
(21) Application number: 98923860.5
(22) Date of filing: 28.05.1998
(51) Int. Cl.: G07F 7/10, H04M 17/00

(54) **SYSTEM AND METHOD FOR A DEBIT CARD TELECOM SERVICE**
SYSTEM UND VERFAHREN FÜR EINEN DEBITKARTENTELEKOMMUNIKATIONSSERVICE
SYSTEME ET PROCEDE POUR SERVICE DE TELECOMMUNICATIONS A CARTE DE DEBIT

(30) Priority: 30.05.1997 US 48227 P; 26.08.1997 US 918382
(43) Date of publication of application: 29.03.2000
(73) Proprietor: Alcatel USA Sourcing, L.P., Plano, TX 75075 (US)
(72) Inventor: LEE, Charles, C., Jr., Plano, TX 75075 (US); DESANDO, Jeffrey, J., Bolingbrook, IL 60440 (US); MOCK, Scott, D., San Antonio, TX 78250 (US)
(74) Representative: Horner, David Richard
(86) International application number: US9811032
(87) International publication number: WO98054679

(56) References cited:
- WO-A-95/25396
- WO-A-96/15505
- WO-A-96/15616
- WO-A-96/41287
- WO-A-97/14108
- WO-A-97/14238
- US-A- 5 283 829
- LOW C: "THE INTERNET TELEPHONY RED HERRING" HP LABORATORIES TECHNICAL REPORT, 15 May 1996, pages 1-15, XP002043901
- CANCER E ET AL: "IN ROLLOUT IN EUROPE" IEEE COMMUNICATIONS MAGAZINE, vol. 31, no. 3, 1 March 1993, pages 38-47, XP000359202
- KABAY S ET AL: "THE SERVICE NODE - AN ADVANCED IN SERVICES ELEMENT" BT TECHNOLOGY JOURNAL, vol. 13, no. 2, 1 April 1995, pages 64-72, XP000500757

## Description

### TECHNICAL FIELD OF THE INVENTION

This invention is related in general to the field of Telecommunications equipment. More particularly, the invention is related to a system and method for a debit card telecom service.

### BACKGROUND OF THE INVENTION

With the advent of the Advanced Intelligent Network (AIN), many new telecommunications services have become available. These new services may include free phone, calling card, virtual net, follow me, fully flexible routing, and debit card. These services are typically defined in a service creation environment (SCE) node in the Advanced Intelligent Network by the service provider and then disseminated to the rest of the network for execution. Many of these new services provide added flexibility and convenience in how we may use our telephone equipment.

WO 97/14108 relates to a financial information system in which a user may access financial data relating to recent credit and debit card transactions. Users may access the financial data from a server over the internet using a web browser. The server generates a report containing the financial data which may be downloaded by the user.

However, after a customer subscribes to a new service,' changes or updates to service parameters are typically done by the service provider customer support personnel who has access to the service creation environment. As a result, the service subscribers or users cannot easily update the service parameters to maximize the benefits of the services they subscribe to.

The debit cards service is an especially appealing service because debit cards have become a popular alternative for consumers who desire to be more financially disciplined and yet still enjoy the convenience of a credit card. The debit card draws on funds previously deposited in an account by the card owner and therefore does not carry the danger of putting the card owner in debt with over spending. Further the card issuer is not exposed to bad debts that cannot be collected. For consumers with bad credit history, debit cards provide the possibility of paying for goods and services without cash.

### SUMMARY OF THE INVENTION

Accordingly, it has become desirable to offer a debit card service to telephone service subscribers. Further, it is desirable to provide a system that enables the subscriber to easily change the service parameters of the account via the World Wide Web or Internet.

In one aspect of the invention there is provided a web interface system for a debit card service in a telecommunications network, the web interface system comprising: at least one service logic program implementing the debit card service having subscriber enterable and subscriber updateable service parameters, the at least one service logic program being expressed in a web browser readable format; a web server, adapted to store the at least one service logic program and to provide access thereto, in the form of at least one web page, by subscribers via web browsers; and a call scripting process residing in the web server and adapted to continuously receive subscriber inputs including information to enter and change service parameters of the debit card service entered on the at least one web page and communicate the subscriber inputs to a predetermined node in the telecommunications network.

In another aspect of the invention there is provided a method for providing a web interface to a service creation environment for implementing a debit card service, the method comprising the steps of: generating a service data file describing the debit card service, the debit card service having subscriber enterable and subscriber updateable service parameters; constructing at least one web page in a web browser readable format from the service data file for displaying information therein; prompting for and receiving subscriber inputs including information to enter and change service parameters of the debit card service on the at least one web page; and communicating the subscriber inputs to the service creation environment.

### BRIEF DESCRIPTION OF THE DRAWINGS

For a better understanding of the present invention, reference may be made to the accompanying drawings, in which:
FIGURE 1 is a simplified block diagram of the creation and execution environment of a debit card service according to an embodiment of the present invention;
FIGURE 2 is a more detailed block diagram of the creation and execution environment of a debit card service according to an embodiment of the present invention;
FIGURES 3A-3B are representative of an exemplary service logic program for debit card service set up according to an embodiment of the present invention;
FIGURES 4A-4D are representative of an exemplary service logic program for debit card service call connection according to an embodiment of the present invention; and
FIGURES 5A-5B are representative of an exemplary service logic program for debit card service call disconnection according to an embodiment of the present invention.

### DETAILED DESCRIPTION OF THE INVENTION

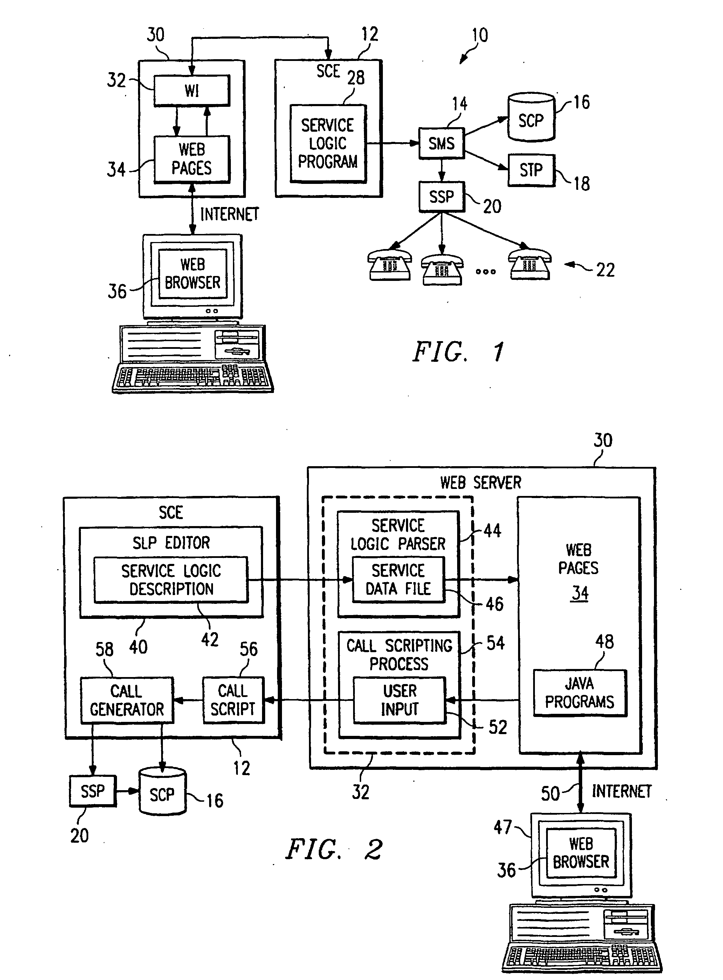

The preferred embodiment(s) of the present invention is (are) illustrated in FIGURES 1-5, like reference numerals being used to refer to like and corresponding parts of the various drawings.

Referring to FIGURE 1, the creation and execution environment of a debit card service 10 is shown. A service creation environment 12 is a network node or component of an advanced intelligent network (AIN), which also includes a service management system (SMS) 14, a service control point (SCP) 16, a signal transfer point (STP) 18, and a service switching point (SSP) 20, which is connected to a plurality of customer premise equipment 22 of telephone service subscribers.

Service creation environment 12 is used to create a service logic program 28 which describes the logic flow of telecommunications services such as premium rate, free phone, calling card, virtual net, fully flexible routing, and debit card. A web server 30 with a database may be used to store service logic programs 28 and data associated therewith.

Premium rate service translates a dialed number into a network routing address after verification that the dialed number is not blocked from the call originator. The caller is then connected to the translated number and charges are billed to the caller. Free phone is a service that translates a dialed number into a network routing address, which is dependent on the first three digits of the calling party number, the day of the week, the time of day, and the specific network numbers designated by the service subscriber. The charges for the call are billed to the called party. The calling card service allows a user to enter a card number, an optional personal identification number, and destination number from the caller. The call is then completed to the collected destination number and billed to the account specified by the card number. The virtual net service gives a group of callers the perception of a private dialing plan, but public facilities owned by the network provider are used to route and connect calls. The caller dials a public access number, and a number of digits, which may be a private numbering plan (PNP) extension, a feature access code plus remaining digits, or an offnet access code plus a public number. The follow me service rolls telephone calls to a first destination number to be rolled over to a second destination number. The user may use the setup service to specify the second destination number, the number of rings at the first destination number before rolling over the call, set the time of day and day of week for the roll over telephone calls, etc. The fully flexible routing service is used to route calls to different locations depending on predefined variables. The calls may be routed depending on whether the call occurs on a weekday or during the weekend and whether the call originates from a local telephone. The call may also be routed depending on user input and the time of day. The debit card service allows a user to deposit a certain amount of funds into an account and to deduct the telephone call charges from the available funds in the account. The debit card service may be setup with an account number, add to or specify the amount of funds in the account, and activate or deactivate the service.

Coupled to service creation environment 12 is a web server 30 which includes a web interface (WI) 32 and at least one web page 34 constructed by one or more java applets or programs. Web interface 32 receives a service logic description from service creation environment 12 that describes the service and provides it to the java applets to be displayed in the form of web pages 34. Web pages 34 are downloaded to a web browser 36 running on a user computer. By stepping through a sequence of web pages, the user may enter and change service parameters. The user inputs are communicated back to web server 30 and sent to service creation environment 12 via web interface 32. The user inputs are then communicated to the network nodes, including service control point 16 to update the data stored therein and to service switching point 20 so that it may act in response to the user inputs.

FIGURE 2 is a simplified block diagram of web interface 32 to service creation environment 12. Service creation environment 12 includes a service logic program (SLP) editor 40, which is used to create a service logic description file 42 that describes the logic flow of a service. Service logic description 42 is provided, downloaded or otherwise communicated to web server 30. A service logic parser 44 of web interface 32 receives and parses service logic description file 42, and creates a service data file 46 therefrom in a web browser readable format, such as hypertext markup language (HTML). Service logic parser 44 may be coded in a scripting language such as practical extraction and report language (PERL) using the common gateway interface (CGI) standard. One or more java programs or applets 48 may be used to define the web page formats within which the HTML service data file 44 is displayed. In this manner, web pages 34 provide a graphical interface to the user and prompt the user for input used to setup, activate, deactivate, and update telecommunications services the user subscribes to. Note that java is an exemplary programming language that may be used to construct the web pages and read the HTML service data files, but other languages may also be used.

A user using a web browser 36 executing on a computer, workstation, telephone, or some other device 47 may download web pages 34 along with java programs 48 over the Internet 50. Web pages 34 display decision options, telephone keypads, and associated information to solicit and receive user input regarding service updates and changes. User inputs 52 entered via each web page 34 are received by web browser 36 and communicated back to web server 30 over the Internet 50. User inputs 52 are then continuously provided to a call scripting process 54 residing on web server 30 that reformats the user inputs and generates a call script file 56 therefrom. Call script-file 56 is then transmitted to service creation environment 12. A call generator 58 residing in service creation environment 12 continuously looks for call script file 56 in predetermined locations in memory, and once one is found, sends it to service switching point 20 for execution and/or to service control point 16 to update the service data stored therein. Alternatively, service switching point 20 may serve as an intermediary and communicate the update data to service control point 16. Thereafter, call generator 58 then deletes call script file 56 from memory and continues looking for the next call script file 56.

As described above, each service created and defined in service creation environment 12 has a service logic description 42 which contains all the information about the service's parameters and run format. Service logic descriptions 42 preferably follow a predefined format so that they may be correctly read and parsed by service logic parser 44. Identifiers or keywords are used in service logic descriptions 42 to identify the lines of text therein. Exemplary identifiers are listed as follows:
- SERVICE: name of service
- TRIGGER: number sent to service switching point to start running the service
- DECISION: name of page
- BUTTON: creates a button and the associated text
- LENGTH: display phone keypad page and specify the character length of requested user input
- CODE: display phone keypad page and specify the exact input required from the user
- ->: specify the next page name (specified by DECISION) to be displayed after a certain user input, e.g. LENGTH, CODE, BUTTON

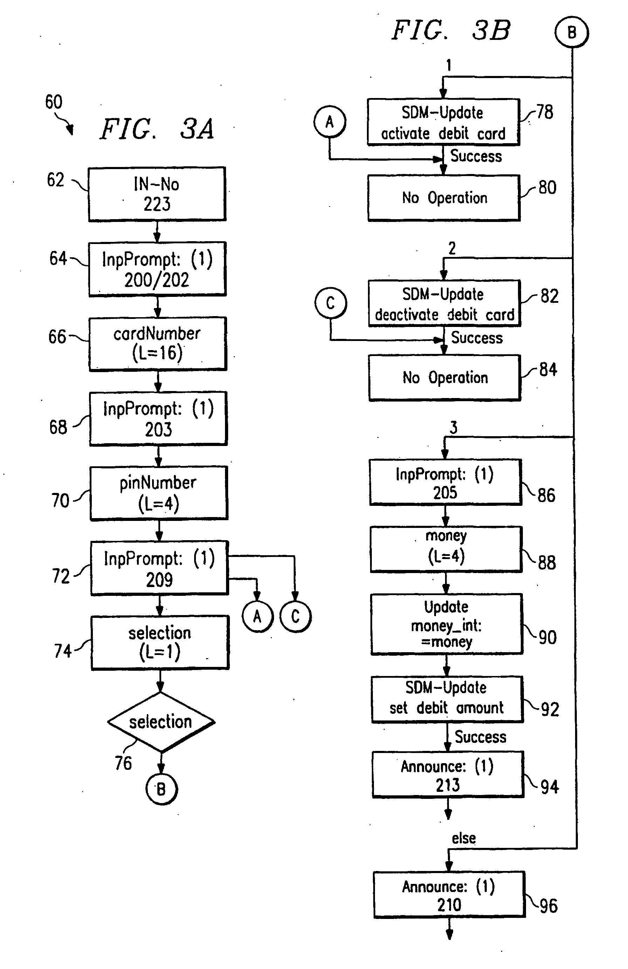

Referring to FIGURES 3A-3B, an exemplary service logic program 60 used to set up a debit card service is shown. An entry service independent block (SIB) 62 is used to indicate the entry point for the service logic program and identifies the trigger, 223 for example, sent at the start of the service. An announcement is made to the caller in SIB 64, which prompts the caller to enter a debit card number which is received in SIB 66. In SIB 68, an announcement further prompts the user to enter a personal identifier number (PIN) which is received in SIB 70. A third announcement then prompts the user to enter a 1, 2, or 3 to select between activating the debit card, deactivating the credit card, or specify the amount of funds in the account, respectively, in SIB 72, which is received in SIB 74. If the user input is determined in decision SIB 76 is a "1", then in SIB 78 a database update occurs to set a variable or flag associated with the debit card account in the database to activate the debit card. Then in SIB 80 the process returns to SIB 72 to allow the caller to select another option. If in SIB 76 the caller enters a "2", then in SIB 82 the activate variable or flag is updated to deactivate the debit card account. SIB 84 then returns the process to SIB 72 for another selection. If in SIB 76 the caller enters a "3", an announcement is played in SIB 86 to prompt the caller to enter a four digit numeral (L = 4) representing a dollar amount for the amount of available funds in the account, which is received in SIB 88. The entered digits are converted to an integer numeral in SIB 90 and the database is updated with this amount in SIB 94. An announcement is then played in SIB 94 to inform the completion of debit card service setup, which concludes the service logic program. If the caller input is anything other than 1, 2, or 3, then an announcement is played to inform the caller to either try again, for example.

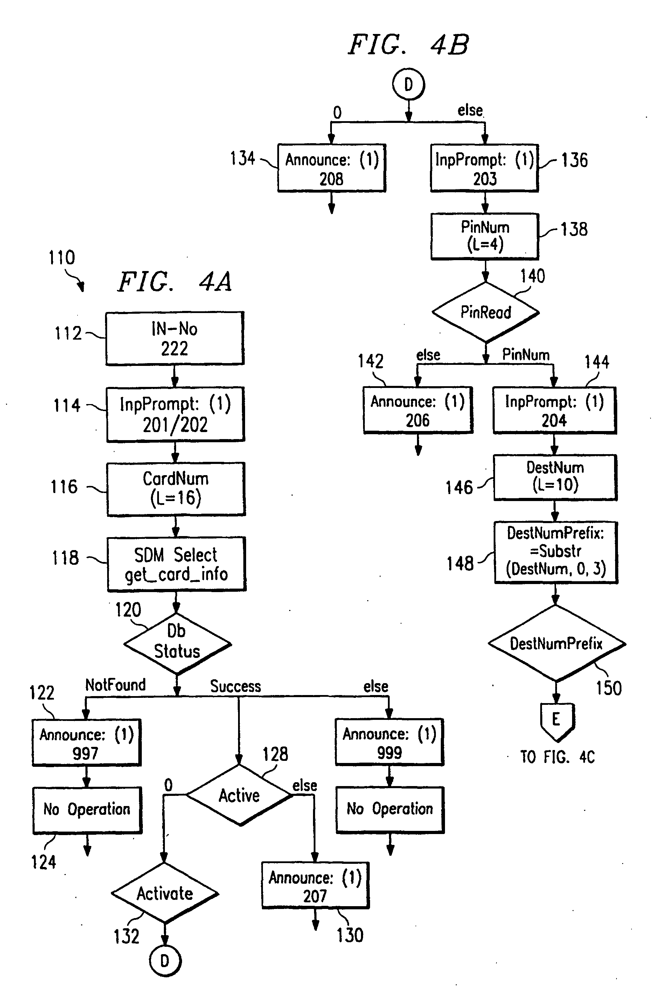

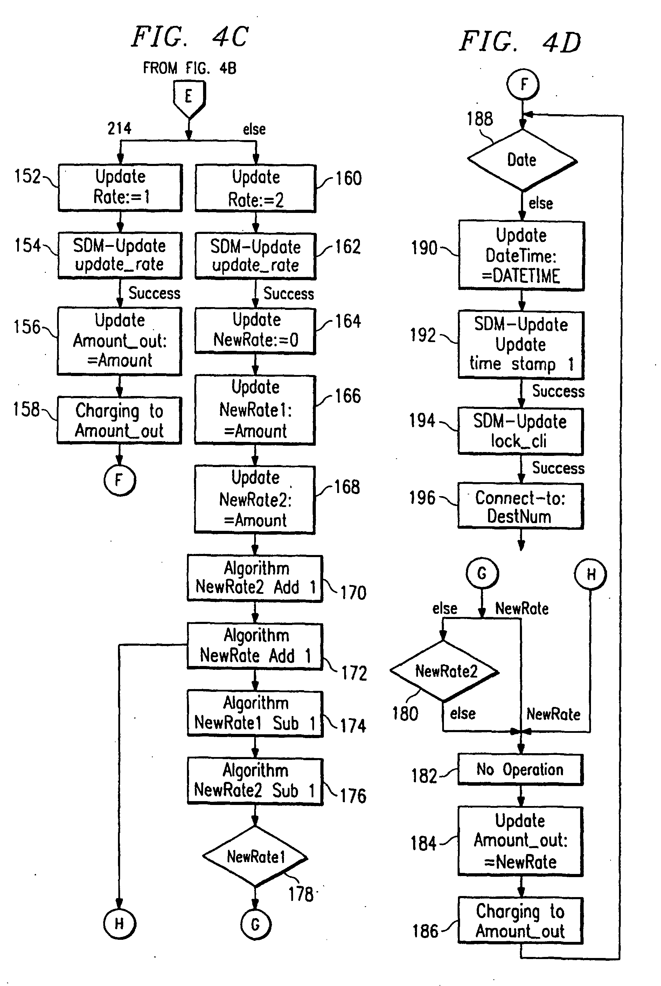

FIGURES 4A-4D are representative of an exemplary service logic program 110 for connecting a debit card call. Entry SIB 112 specifies the trigger, 222 for example, for the start of the service. In SIB 114, an announcement is made to prompt the caller to enter a 16-digit debit card number which is received in SIB 116. In response to the debit card number received from the caller, information associated with the debit account is retrieved from the database in SIB 118. If the debit card number or the data associated therewith cannot be located in the database, then an appropriate announcement is played to the caller in SIB 122 and the service concludes in SIB 124. If data retrieval from the database is successful, then a retrieved active variable or flag is checked to determine if the card is currently in use in SIB 128. If the value of the variable indicates that a telephone call is currently connected using the funds from this debit card account, then an announcement is played to the caller in SIB 110 and the process concludes. Alternatively, provisions may be made to allow a fixed number of calls to be simultaneously made from a single account, if desired.

If the debit account is not currently active, then in decision SIB 132 a determination is made as to whether the debit card account has been activated. If not, then an appropriate announcement is made in SIB 134 to inform the caller. If the debit account has been activated, then the user is prompted in SIB 116 to enter the 4-digit personal identification number, which is received in SIB 138. If the received personal identification number is not correct, an appropriate announcement is played in SIB 142. If the personal identification number is correct, then an announcement is played in SIB 144 to prompt for a destination number, which is received in SIB 146. In SIB 148, the destination area code is checked to determine if it is a local number or long distance number. If the area code is 214, for example, as determined in SIB 150, then SIBs 152-158 determine the per minute rate that will be charged to the call. If the area code is anything other than 214, for example, then SIBs 160-186 determine the per minute rate that will be charged to the long distance call. In this example, the long distance rate is twice the rate charged for a local call. After the rate is determined, the current date and time is obtained in SIB 188 and a variable is set to the current date and time obtained in SIB 190. The database is then updated with the current date and time stamp in SIB 192. In SIB 194, the origination telephone circuit is "locked" and the caller is connected to the destination number in SIB 196.

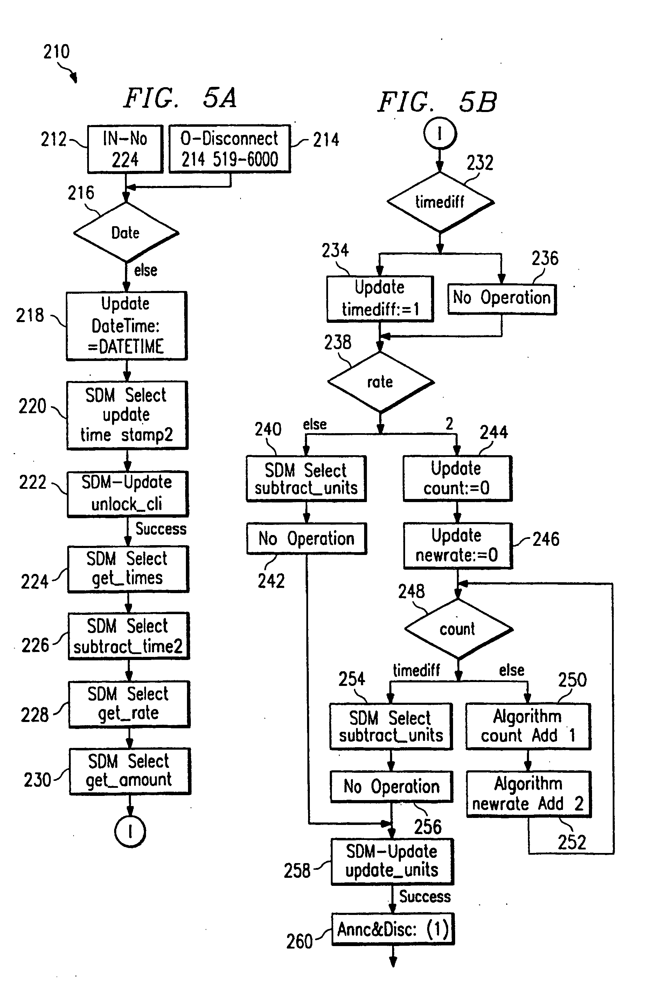

FIGURES 5A and 5B are representative of an exemplary service logic program 210 that provides the call disconnection sequence for a debit card call. An entry SIB 212 provides an entry point and the trigger, 224 for example, for the service logic program. Alternatively, another entry point is available from SIB 214, which is initiated upon an on-hook event. In SIBs 216 and 218 the current date and time is obtained, which is the time that the telephone call ended. The current time is used to update a second time stamp variable in SIB 220. In SIB 222 the telephone circuit is unlocked to make it available to make or take another call. In SIBs 224 and 226, the time difference between the two time stamps, which is the call duration, is computed. The per minute rate is obtained from the database in SIB 228 and the amount of funds available in the account is obtained from the database in SIB 230. In decision SIB 232, it is determined whether the time difference between the time stamps or the call duration is zero or less than a minute; if so, in SIB 234 the time difference is set to equal one minute so that the minimum call duration is one minute. If the call duration is not zero, then no operation is performed as in SIB 236. In decision SIB 238, it is determined if the rate for the call is long distance or local. If the call was local, then the amount of funds in the debit account is subtracted by the charge for the telephone call in SIBs 240 and 242. If the call was long distance where the rate was twice that of a local call, then SIBs 250-256 in effect multiplies the number of minutes or units for the call duration by two to compute for the total charge for the call, which is then subtracted from the funds in the account. In SIB 258, the amount of funds in the debit account is updated. SIB 260 provides for an announcement which may be used to provide a feedback to the caller of the remaining funds in the account, for example.

From the foregoing, web server 30 may store the following information associated with each debit account: debit card number, personal identification number, the amount of funds in the account, account active variable, account activated/deactivated variable, start time stamp, stop time stamp, locked/unlocked circuit, and per minute rate for the call.

Web interface 32 receives the debit card service setup and runtime execution logic programs from service creation environment 12 and generates hypertext markup language (HTML) representations thereof. Exemplary HTML files for the debit card services are shown below: 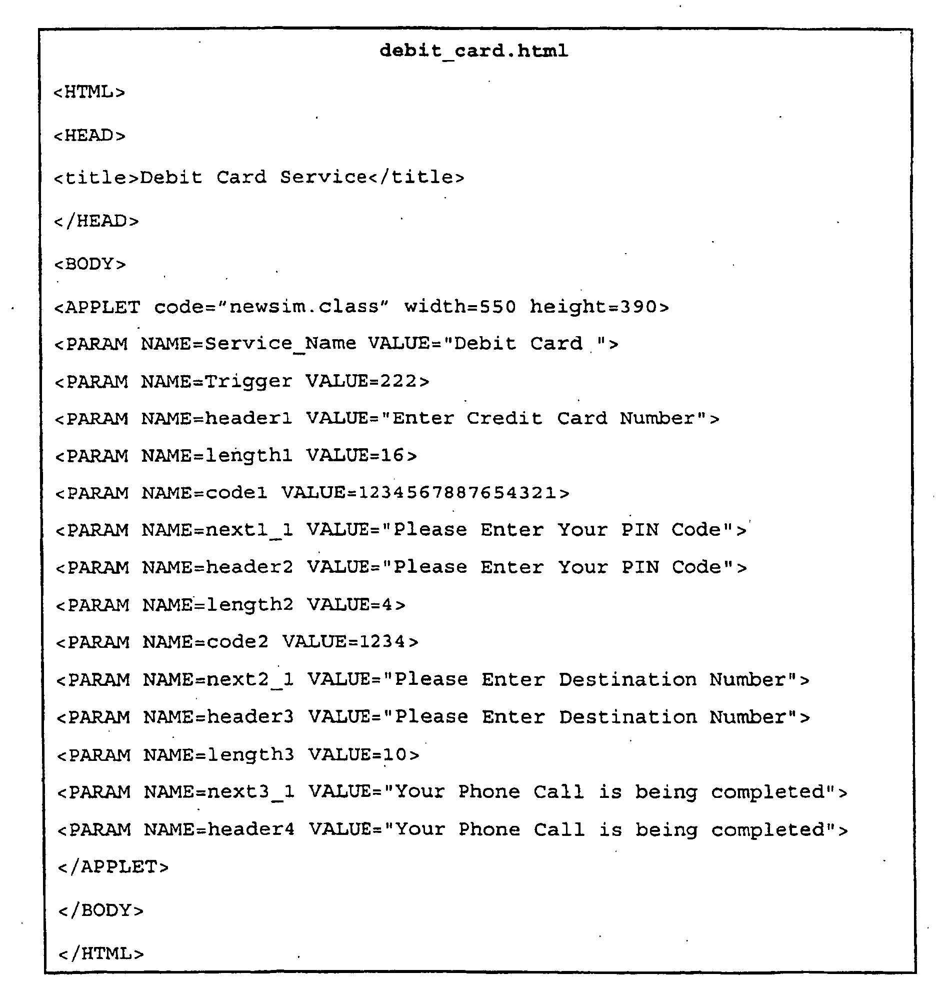 The HTML files are then read by the java programs in web server 30 to construct web pages 34, which are downloaded to web browsers to be accessed by users.

Exemplary service logic descriptions for premium rate, free phone, calling card, follow me, virtual net, flexible routing, and debit card services are provided in the charts below for reference.

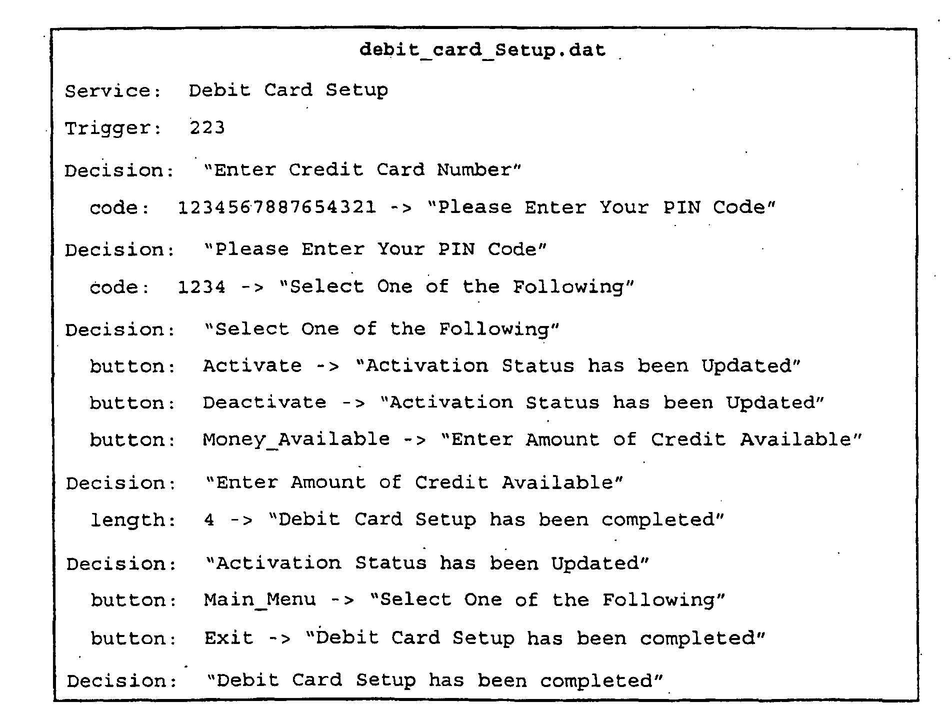

Although several embodiments of the present invention and its advantages have been described in detail, it should be understood that mutations, changes, substitutions, transformations, modifications, variations, and alterations can be made therein without departing from the teachings of the present invention, the scope of the invention being set forth by the appended claims.

## Claims

1. A web interface system (10) for a debit card service in a telecommunications network, the web interface system comprising:
at least one service logic program (28) implementing the debit card service having subscriber enterable and subscriber updateable service parameters, the at least one service logic program being expressed in a web browser readable format;
a web server (30), adapted to store the at least one service logic program and to provide access thereto, in the form of at least one web page (34), by subscribers via web browsers (36); and
a call scripting process (54) residing in the web server and adapted to continuously receive subscriber inputs including information to enter and change service parameters of the debit card service entered on the at least one web page and communicate the subscriber inputs to a predetermined node in the telecommunications network.

2. The web interface system, as set forth in claim 1, further comprising a service logic parser (44) residing in the web server and adapted to receive a service logic program from a service creation environment (12) in the telecommunications network, parse the service logic program and generate a web browser readable service data file (46).

3. The web interface system, as set forth in claim 2, further comprising a call generator (58) residing in the service creation environment adapted to continuously receive the subscriber inputs from the call scripting process and continuously communicate the subscriber inputs to a service switching point (20) for execution.

4. The web interface system, as set forth in claim 2, further comprising a call generator (58) residing in the service creation environment adapted to continuously receive the subscriber inputs from the call scripting process and continuously communicate the subscriber inputs to a service control point (16) for database update.

5. The web interface system, as set forth in claim 1, wherein the at least one service logic program comprises:
a service logic program adapted to set up a debit card service;
a service logic program adapted to connect a debit card call; and
a service logic program adapted to disconnect the debit card call.

6. The web interface system, as set forth in claim 5, wherein the service logic program adapted to set up a debit card service comprises at least one web page requesting the subscriber to enter a debit card number and a personal identification number.

7. The web interface system, as set forth in claim 5, wherein the service logic program adapted to set up a debit card service comprises at least one web page requesting the subscriber to select from an option to activate the debit card service, an option to deactivate the debit card service, and an option to enter the amount of funds in a predetermined debit card account.

8. The web interface system, as set forth in claim 5, wherein the service logic program comprises at least one web page requesting the subscriber to enter a debit card number and a personal identification number.

9. The web interface system, as set forth in claim 8, wherein the service logic program adapted to connect a debit card call comprises at least one service independent block adapted to verify the debit card number and personal identification number.

10. The web interface system, as set forth in claim 5, wherein the service logic program adapted to connect a debit card call comprises at least one web page requesting the subscriber to enter a destination number.

11. The web interface system, as set forth in claim 10, wherein the service logic program adapted to connect a debit card call comprises at least one service independent block adapted to determine a per minute rate charge in response to receiving the destination number.

12. The web interface system, as set forth in claim 11, wherein the service logic program adapted to connect a debit card call comprises:
at least one service independent block adapted to determine a call start time; and
at least one service independent block adapted to connect the subscriber to the destination number.

13. The web interface system, as set forth in claim 11, wherein the service logic program adapted to disconnect the debit card call comprises:
at least one service independent block adapted to disconnect the subscriber from the destination number;
at least one service independent block adapted to determine a call duration;
at least one service independent block adapted to determine a charge for the debit card call; and
at least one service independent block adapted to subtract the charge from an amount of funds in predetermined debit card service account.

14. The web interface system of claim 1, wherein the call scripting process is adapted to continuously communicate the subscriber inputs to the predetermined node in the telecommunications network.

15. A method for providing a web interface to a service creation environment for implementing a debit card service, the method comprising the steps of:
generating a service data file (46) describing the debit card service, the debit card service having subscriber enterable and subscriber updateable service parameters;
constructing at least one web page (34) in a web browser (36) readable format from the service data file for displaying information therein;
prompting for and receiving subscriber inputs including information to enter and change service parameters of the debit card service on the at least one web page; and
communicating the subscriber inputs to the service creation environment.

16. The method, as set forth in claim 15, further comprising the step of downloading the at least one web page to a subscriber device (47) for displaying the at least one web page and receiving the subscriber inputs thereon.

17. The method, as set forth in claim 15, further comprising the steps of:
executing a web browser on a subscriber device; and
downloading the at least one web page to the subscriber device for displaying the at least one web page and receiving the subscriber inputs thereon.

18. The method, as set forth in claim 16, further comprising the step of continuously transferring the subscriber inputs from the subscriber device to the service creation environment.

19. The method of any of claims 15 to 18, wherein the subscriber inputs comprise a debit card number and a personal identification number.

20. The method, as set forth in claim 15, further comprising the steps of:
prompting for (144) and receiving (146) a destination number on the at least one web page; and
communicating the destination number to the service creation environment.

21. The method, as set forth in claim 15, further comprising the steps of:
prompting for (72) and receiving (74), on the at least one web page, a subscriber selection between the options of service activation, service deactivation, and identification of account amount; and
communicating the subscriber selection to the service creation environment.

22. The method, as set forth in claim 20, further comprising the step of determining a per minute rate charge in response to receiving the destination number.

23. The method, as set forth in claim 22, further comprising the steps of:
computing a call start time (188); and
connecting (196) the subscriber to the destination number.

24. The method, as set forth in claim 23, further comprising the steps of:
disconnecting (222) the subscriber from the destination number;
computing (224, 226) a call duration;
computing a charge for the debit card call; and
subtracting the charge from an amount of funds in predetermined debit card service account.

## Patentansprüche

1. Ein Web-Schnittstellen-System (10) für einen Debitkartenservice in einem Telekommunikationsnetz, wobei das Web-Schnittstellensystem folgendes umfasst:
Mindestens ein Dienstlogik-Programm (28), welches den Debitkartenservice implementiert und das Dienstparameter hat, die vom Teilnehmer eingegeben und vom Teilnehmer geändert werden können, wobei das mindestens eine Dienstlogikprogramm in einem von einem Web-Browser lesbaren Format ausgedrückt wird;
Einen Web-Server (30), der so angepasst ist, dass er mindestens ein Dienstlogik-Programm in Form von mindestens einer Web-Seite (34) speichert und Teilnehmern über Web-Browser (36) Zugang dazu bietet; und
Einen Anruf-Skripting-Prozess (54), der auf dem Web-Server läuft und so angepasst ist, dass er kontinuierlich Teilnehmer-Eingaben empfängt, die Informationen über die Eingabe und Änderung von Dienstparametern des Debitkartenservice enthalten, die auf der mindestens einen Web-Seite eingegeben wurden, und der die Teilnehmereingaben an einen vorher festgelegten Knoten im Telekommunikationsnetz sendet.

2. Das Web-Schnittstellen-System, wie in Anspruch 1 bekannt gegeben, das weiterhin einen Dienstlogik-Parser (44) umfasst, der sich im Web-Server befindet und so angepasst ist, dass er ein Dienstlogik-Programm von einer Umgebung zur Erzeugung von Diensten (12) im Telekommunikationsnetz empfängt, das Dienstlogik-Programm analysiert und eine von Web-Browsern lesbare Dienst-Datei (46) erzeugt.

3. Das Web-Schnittstellen-System, wie in Anspruch 2 bekannt gegeben, das weiterhin einen Anruf-Generator (58) umfasst, der sich in der Umgebung zur Erzeugung von Diensten befindet und so angepasst ist, dass er kontinuierlich die Teilnehmer-Eingaben vom Anruf-Skripting-Prozess empfängt und die Teilnehmer-Eingaben kontinuierlich zur Ausführung an einen Dienst-Vermittlungs-Punkt (20) sendet.

4. Das Web-Schnittstellen-System, wie in Anspruch 2 bekannt gegeben, das weiterhin einen Anruf-Generator (58) umfasst, der sich in der Umgebung zur Erzeugung von Diensten befindet und so angepasst ist, dass er kontinuierlich die Teilnehmer-Eingaben vom Anruf-Skripting-Prozess empfängt und die Teilnehmer-Eingaben kontinuierlich zur Datenbank-Aktualisierung an einen Dienstkontrollpunkt (16) sendet.

5. Das Web-Schnittstellen-System, wie in Anspruch 1 bekannt gegeben, worin das mindestens eine Dienstlogik-Programm folgendes umfasst:
Ein Dienstlogik-Programm, das so angepasst ist, dass es einen Debitkartenservice einrichten kann;
Ein Dienstlogik-Programm, das so angepasst ist, dass es einen Debitkarten-Anruf durchschalten kann;
Ein Dienstlogik-Programm, das so angepasst ist, dass es einen Debitkarten-Anruf beenden kann.

6. Das Web-Schnittstellen-System, wie in Anspruch 5 bekannt gegeben, worin das Dienstlogik-Programm, das so angepasst ist, dass es einen Debitkartenservice einrichten kann, mindestens eine Web-Seite umfasst, auf welcher der Teilnehmer aufgefordert wird, eine Debitkartennummer und eine persönliche Identifikationsnummer einzugeben.

7. Das Web-Schnittstellen-System, wie in Anspruch 5 bekannt gegeben, worin das Dienstlogik-Programm, das so angepasst ist, dass es einen Debitkartenservice einrichten kann, mindestens eine Web-Seite umfasst, auf welcher der Teilnehmer aufgefordert wird, aus einer Möglichkeit, den Debitkartenservice zu aktivieren, einer Möglichkeit, den Debitkartenservice zu deaktivieren und einer Möglichkeit, den Guthaben-Betrag auf einem vorher festgelegten Debitkarten-Konto einzugeben, auszuwählen.

8. Das Web-Schnittstellen-System, wie in Anspruch 5 bekannt gegeben, worin das Dienstlogik-Programm mindestens eine Web-Seite umfasst, auf welcher der Teilnehmer aufgefordert wird, eine Debitkartennummer und eine persönliche Identifikationsnummer einzugeben.

9. Das Web-Schnittstellen-System, wie in Anspruch 8 bekannt gegeben, worin das Dienstlogik-Programm, das so angepasst ist, dass es einen Debitkarten-Anruf durchschaltet, mindestens einen dienstunabhängigen Block umfasst, der so angepasst ist, dass er die Debitkartennummer und die persönliche Identifikationsnummer überprüft.

10. Das Web-Schnittstellen-System, wie in Anspruch 5 bekannt gegeben, worin das Dienstlogik-Programm, das so angepasst ist, dass es einen Debitkarten-Anruf durchschaltet, mindestens eine Web-Seite umfasst, auf welcher der Teilnehmer aufgefordert wird, eine Zielnummer einzugeben.

11. Das Web-Schnittstellen-System, wie in Anspruch 10 bekannt gegeben, worin das Dienstlogik-Programm, das so angepasst ist, dass es einen Debitkarten-Anruf durchschaltet, mindestens einen dienstunabhängigen Block umfasst, der so angepasst ist, dass er die Gebühr für eine Gesprächsminute als Reaktion auf den Empfang der Zielnummer feststellen kann.

12. Das Web-Schnittstellen-System, wie in Anspruch 11 bekannt gegeben, worin das Dienstlogik-Programm, das so angepasst ist, dass es einen Debitkarten-Anruf durcbschaltet, folgendes umfasst:
Mindestens einen dienstunabhängigen Block, der so angepasst ist, dass er eine Anruf-Startzeit bestimmen kann; und
Mindestens einen dienstunabhängigen Block, der so angepasst ist, dass er den Teilnehmer mit der Zielnummer verbinden kann.

13. Das Web-Schnittstellen-System, wie in Anspruch 11 bekannt gegeben, worin das Dienstlogik-Programm, das so angepasst ist, dass es den Debitkarten-Anruf beenden kann, folgendes umfasst:
Mindestens einen dienstunabhängigen Block, der so angepasst ist, dass er die Verbindung des Teilnehmers mit der Zielnummer abbauen kann;
Mindestens einen dienstunabhängigen Block, der so angepasst ist, dass er die Gesprächsdauer bestimmen kann;
Mindestens einen dienstunabhängigen Block, der so angepasst ist, dass er die Gebühr für den Debitkarten-Anruf bestimmen kann; und
Mindestens einen dienstunabhängigen Block, der so angepasst ist, dass er die Gebühr von einem Betrag auf einem vorher festgelegten Debitkarten-Konto abziehen kann.

14. Das Web-Schnittstellen-System aus Anspruch 1, worin der Anruf-Skripting-Prozess so angepasst ist, dass er die Teilnehmereingaben kontinuierlich an den vorher festgelegten Knoten im Telekommunikationsnetz sendet.

15. Ein Verfahren zur Bereitstellung einer Web-Schnittstelle für eine Umgebung zur Erzeugung von Diensten zur Implementation eines Debitkartenservice, wobei das Verfahren folgende Schritte umfasst:
Erzeugung einer Dienst-Datei (46), die den Debitkartenservice beschreibt, wobei der Debitkartenservice Dienstparameter aufweist, die vom Teilnehmer eingegeben und vom Teilnehmer aktualisiert werden können;
Konstruktion von mindestens einer Web-Seite (34) in einem von einem Web-Browser (36) lesbaren Format aus einer Dienst-Datei zur Anzeige der darin enthaltenen Information;
Aufforderung und Empfang von Teilnehmereingaben, einschließlich Informationen zur Eingabe und Änderung von Dienstparametem des Debitkartenservice auf der mindestens einen Web-Seite; und Übertragung der Teilnehmer-Eingaben an die Umgebung zur Erzeugung von Diensten.

16. Das Verfahren, wie in Anspruch 15 bekannt gegeben, das weiterhin den Schritt des Herunterladens der mindestens einen Web-Seite in eine Teilnehmereinrichtung (47) umfasst, um die mindestens eine Web-Seite anzuzeigen und die Teilnehmereingaben auf ihr zu empfangen.

17. Das Verfahren, wie in Anspruch 15 bekannt gegeben, das weiterhin folgende Schritte umfasst:
Ausführung eines Web-Browsers auf einer Teilnehmereinrichtung; und
Herunterladen der mindestens einen Web-Seite auf die Teilnehmereinrichtung, um die mindestens eine Web-Seite anzuzeigen und die Teilnehmereingaben auf ihr zu empfangen.

18. Das Verfahren, wie in Anspruch 16 bekannt gegeben, das weiterhin den Schritt der kontinuierlichen Übertragung der Teilnehmereingaben von der Teilnehmereinrichtung an die Umgebung zur Erzeugung von Diensten umfasst.

19. Das Verfahren eines beliebigen der Ansprüche 15 bis 18, worin die Teilnehmereingaben eine Debitkarten-Nummer und eine persönliche Identifikationsnummer umfassen.

20. Das Verfahren, wie in Anspruch 15 bekannt gegeben, das weiterhin folgende Schritte umfasst:
Anforderung (144) und Empfangen (146) einer Zielnummer auf der mindestens einen Web-Seite; und
Übertragung der Zielnummer an die Umgebung zur Erzeugung von Diensten.

21. Das Verfahren, wie in Anspruch 15 bekannt gegeben, das weiterhin folgende Schritte umfasst:
Auf der mindestens einen Web-Seite Anfordern (72) und Empfangen (74) einer Teilnehmer-Auswahl zwischen den Möglichkeiten der Dienstaktivierung, der Dienst-Deaktivierung und der Feststellung des Kontostandes; und
Übertragung der Teilnehmer-Auswahl an die Umgebung zur Erzeugung von Diensten.

22. Das Verfahren, wie in Anspruch 20 bekannt gegeben, das weiterhin als Reaktion auf den Empfang der Zielnummer den Schritt der Feststellung einer Gebühr für eine Gesprächsminute umfasst.

23. Das Verfahren, wie in Anspruch 22 bekannt gegeben, das weiterhin folgende Schritte umfasst:
Berechnung einer Anruf-Startzeit (188); und
Verbinden (196) des Teilnehmers mit der Zielnummer.

24. Das Verfahren, wie in Anspruch 23 bekannt gegeben, das weiterhin folgende Schritte umfasst:
Abbau der Verbindung (222) des Teilnehmers mit der Zielnummer;
Berechnung (224, 226) einer Gesprächsdauer;
Berechnung der Gebühr für den Debitkarten-Anruf; und
Abbuchen der Gebühr vom Kontostand des vorher festgelegten Debitkartenservice-Kontos.

## Revendications

1. Système d'interface Web (10) pour un service de carte de paiement dans un réseau de télécommunications, le système d'interface Web comportant :
au moins un programme de logique de service (28) mettant en oeuvre le service de carte de paiement ayant des paramètres de service pouvant être entrés par l'abonné et pouvant être mis à jour par l'abonné, le au moins un programme de logique de service étant exprimé dans un format lisible par un navigateur;
un serveur Web (30), prévu pour enregistrer le au moins un programme de logique de service et pour y permettre l'accès, sous la forme d'au moins une page Web, par des abonnés par l'intermédiaire de navigateurs (36); et
un processus de script d'appel (54) résidant dans le serveur Web et prévu pour recevoir en continu des entrées d'abonné comprenant de l'information afin d'entrer et modifier des paramètres de service du service de carte de paiement entrés sur la au moins une page Web et pour communiquer les entrées d'abonné à un noeud prédéterminé dans le réseau de télécommunications.

2. Système d'interface Web selon la revendication 1, comportant en outre un programme d'analyse de logique de service (44) résidant dans le serveur Web et prévu pour recevoir un programme de logique de service provenant d'un environnement de création de service (12) dans le réseau de télécommunications, analyser le programme de logique de service et générer un fichier de données de service lisible par un navigateur (46).

3. Système d'interface Web selon la revendication 2, comportant en outre un générateur d'appel (58) résidant dans l'environnement de création de service prévu pour recevoir en continu les entrées d'abonné provenant du processus de script d'appel et pour communiquer en continu les entrées d'abonné à un point de commutation de service (20) pour exécution.

4. Système d'interface Web selon la revendication 2, comportant en outre un générateur d'appel (58) résidant dans l'environnement de création de service prévu pour recevoir en continu les entrées d'abonné provenant du processus de script d'appel et pour communiquer en continu les entrées d'abonné à un point de commande de service (16) pour la mise à jour de base de données.

5. Système d'interface Web selon la revendication 1, dans lequel le au moins un programme de logique de service comporte :
un programme de logique de service prévu pour configurer un service de carte de paiement;
un programme de logique de service prévu pour raccorder un appel par carte de paiement; et
un programme de logique de service prévu pour déconnecter l'appel par carte de paiement.

6. Système d'interface Web selon la revendication 5, dans lequel le programme de logique de service prévu pour configurer un service de carte de paiement comporte au moins une page Web demandant à l'abonné d'entrer un numéro de carte de paiement et un numéro d'identification personnel.

7. Système d'interface Web selon la revendication 5, dans lequel le programme de logique de service prévu pour configurer un service de carte de paiement comporte au moins une page Web demandant à l'abonné de choisir parmi une option d'activation du service de carte de paiement, une option de désactivation du service de carte de paiement, et une option d'entrée de la quantité de fonds dans un compte de carte de paiement prédéterminé.

8. Système d'interface Web selon la revendication 5, dans lequel le programme de logique de service comporte au moins une page Web demandant à l'abonné d'entrer un numéro de carte de paiement et un numéro d'identification personnel.

9. Système d'interface Web selon la revendication 8, dans lequel le programme de logique de service prévu pour raccorder un appel par carte de paiement comporte au moins un bloc indépendant de service prévu pour vérifier le numéro de carte de paiement et le numéro d'identification personnel.

10. Système d'interface Web selon la revendication 5, dans lequel le programme de logique de service prévu pour raccorder un appel par carte de paiement comporte au moins une page Web demandant à l'abonné d'entrer un numéro de destination.

11. Système d'interface Web selon la revendication 10, dans lequel le programme de logique de service prévu pour raccorder un appel par carte de paiement comporte au moins un bloc indépendant de service prévu pour déterminer un prix à la minute en réponse à la réception du numéro de destination.

12. Système d'interface Web selon la revendication 11, dans lequel le programme de logique de service prévu pour raccorder un appel par carte de paiement comporte :
au moins un bloc indépendant de service prévu pour déterminer une heure de début d'appel; et
au moins un bloc indépendant de service prévu pour raccorder l'abonné au numéro de destination.

13. Système d'interface Web selon la revendication 11, dans lequel le programme de logique de service prévu pour déconnecter l'appel par carte de paiement comporte :
au moins un bloc indépendant de service prévu pour déconnecter l'abonné du numéro de destination;
au moins un bloc indépendant de service prévu pour déterminer une durée d'appel;
au moins un bloc indépendant de service prévu pour déterminer un prix pour l'appel par carte de paiement; et
au moins un bloc indépendant de service prévu pour soustraire le prix d'une quantité de fonds dans un compte de service de carte de paiement prédéterminé.

14. Système d'interface Web de la revendication 1, dans lequel le processus de script d'appel est prévu pour communiquer en continu les entrées d'abonné au noeud prédéterminé dans le réseau de télécommunications.

15. Procédé destiné à procurer une interface Web à un environnement de création de service pour la mise en oeuvre d'un service de carte de paiement, le procédé comportant les étapes consistant à :
générer un fichier de données de service (46) décrivant le service de carte de paiement, le service de carte de paiement ayant des paramètres de service pouvant être entrés par l'abonné et pouvant être mis à jour par l'abonné;
construire au moins une page Web (34) dans un format lisible par un navigateur (36) à partir du fichier de données de service afin d'y afficher de l'information;
demander et recevoir des entrées d'abonné comprenant de l'information afin d'entrer et modifier des paramètres de service du service de carte de paiement sur la au moins une page Web; et
communiquer les entrées d'abonné à l'environnement de création de service.

16. Procédé selon la revendication 15, comportant en outre l'étape consistant à télécharger la au moins une page Web dans un dispositif d'abonné (47) de façon à afficher la au moins une page Web et recevoir les entrées d'abonné dedans.

17. Procédé selon la revendication 15, comportant en outre les étapes consistant à :
exécuter un navigateur sur un dispositif d'abonné; et
télécharger la au moins une page Web dans le dispositif d'abonné afin d'afficher la au moins une page Web et recevoir les entrées d'abonné dedans.

18. Procédé selon la revendication 16, comportant en outre l'étape consistant à transférer en continu les entrées d'abonné depuis le dispositif d'abonné vers l'environnement de création de service.

19. Procédé selon l'une quelconque des revendications 15 à 18, dans lequel les entrées d'abonné comportent un numéro de carte de paiement et un numéro d'identification personnel.

20. Procédé selon la revendication 15, comportant en outre les étapes consistant à :
demander (144) et recevoir (146) un numéro de destination sur la au moins une page Web; et
communiquer le numéro de destination à l'environnement de création de service.

21. Procédé selon la revendication 15, comportant en outre les étapes consistant à :
demander (72) et recevoir (74), sur la au moins une page Web, une sélection d'abonné entre les options d'activation de service, de désactivation de service, et d'identification de valeur de compte; et
communiquer la sélection d'abonné à l'environnement de création de service.

22. Procédé selon la revendication 20, comportant en outre l'étape consistant à déterminer un prix par minute en réponse à la réception du numéro de destination.

23. Procédé selon la revendication 22, comportant en outre les étapes consistant à :
calculer une heure de début d'appel (188); et
raccorder (196) l'abonné au numéro de destination.

24. Procédé selon la revendication 23, comportant en outre les étapes consistant à :
déconnecter (222) l'abonné du numéro de destination;
calculer (224, 226) une durée d'appel;
calculer un prix pour l'appel par carte de paiement; et
soustraire le prix d'une quantité de fonds dans un compte de service de carte de paiement prédéterminé.
